Europäisches Patentamt

(19) European Patent Office

Office européen des brevets

(11) Numéro de publication : **0 160 826**
**B1**

(12) **FASCICULE DE BREVET EUROPÉEN**

(45) Date de publication du fascicule du brevet :
09.08.89

(51) Int. Cl.⁴ : **H 04 Q 11/04**

(21) Numéro de dépôt : 85103677.2

(22) Date de dépôt : 28.03.85

(54) Réseau de connexion spatial pour signaux numériques à haut débit.

(30) Priorité : 02.04.84 FR 8405163

(43) Date de publication de la demande :
13.11.85 Bulletin 85/46

(45) Mention de la délivrance du brevet :
09.08.89 Bulletin 89/32

(84) Etats contractants désignés :
BE CH DE FR GB IT LI NL SE

(56) Documents cités :
EP–A– 0 027 226
EP–A– 0 034 776
EP–A– 0 056 600
EP–A– 0 097 360
DE–A– 2 836 695
TELCOM REPORT, "Sonderheft", no. 8, février 1985,
pages 50-57, Passau, DE; E. KNORPP et al.: "Die
Evolution des ISDN zum breitbandigen Universalnetz"
IEEE TRANSACTIONS ON AEROSPACE AND ELEC-
TRONIC SYSTEMS, vol. AES-16, no. 2, mars 1980,
pages 169-179, IEEE, New York, US; A.S. ACAMPORA
et al.: "Frame synchronizer concept for TDMA burst
modems"

(73) Titulaire : ALCATEL CIT
33, rue Emeriau
F-75015 Paris (FR)

(72) Inventeur : Onno, Guy
Gouzabas St Quay Perros
F-22700 Perros Guirec (FR)
Inventeur : Jaouen, Jean-Yves
Rue de Kernéguez Log. Les. Lan
F-22300 Lannion (FR)

(74) Mandataire : Weinmiller, Jürgen et al
Lennéstrasse 9 Postfach 24
D-8133 Feldafing (DE)

Jouve, 18, rue St-Denis, 75001 Paris, France

## Description

L'invention concerne un réseau de connexion spatial pour la commutation de signaux numériques à des débits élevés, par exemple de l'ordre de 100 M bit/s, utilisable, entre autres, dans des autocommutateurs équipant des réseaux numérisés à large bande tels que par exemple les réseaux visiophoniques à haute qualité.

Les dispositifs de commutation en général sont bien connus de l'homme de l'art en ce qui concerne leur architecture et leur mode de réalisation et en particulier lorsqu'il s'agit de commuter des signaux numériques.

On trouvera une structure générale des réseaux de connexion dans l'article de Ch. CLOS « A study of Non-Blocking Switching Networks. BSTJ Vol. 32 N° 2, mars 1953 pages 406-425. L'article « Schitching, Synchronizing and Signalling in PCM Exchanges » de W. NEU et A. KUENDIG Colloque International de Commutation Electronique Paris 28 mars, 2 avril 1966, pages 513-520, Edition Chiron, Paris, concerne plus particulièrement un système de commutation temporel.

Ces dispositifs à bas débits mettent en œuvre des technologies relativement lentes et ne prennent pas en compte les contraintes spécifiques au traitement des signaux numériques rapides, ces contraintes étant :

— la mise en œuvre d'une technologie performante,

— l'amélioration des liaisons intérétages, le traitement de signaux rapides nécessitant de conserver des temps de transition courts, en particulier dans les systèmes de transmission entre étages, ou entre cartes,

— la régénération des signaux, car malgré les précautions prises dans le choix de la technologie et des systèmes de transmission, la forme des signaux numériques se dégrade progressivement il est indispensable de les régénérer en amplitude et en phase,

— le système de supervision ; lorsque le choix d'un système de contrôle passif a été fait sur des critères d'économie et de simplicité de mise en œuvre, la réalisation du dispositif doit prendre en compte le fait que le temps de transfert d'un point à un autre du réseau de connexion est grand et indéterminé par rapport à la période du signal.

En effet la supervision des dispositifs à bas débit est généralement fondée sur un procédé de contrôle de communication vérifiant, en mode continu ou par échantillonnage :

— la conformité des itinéraires établis aux données de la demande,

— le bon fonctionnement des divers moyens de transmission et de commutation intervenant dans la constitution de l'itinéraire.

Le contrôle continu des communications n'est réalisable que dans les systèmes dupliqués fonctionnant en microsynchronisme (en identité de phase, bit à bit).

Les procédés de contrôle par échantillonnage qui évitent la duplication du réseau de connexion sont de deux types :

— le contrôle actif qui consiste à introduire à l'entrée du réseau une information connue et à l'observer en sortie, et éventuellement en un certain nombre de points intermédiaires,

— le contrôle passif qui consiste à observer en divers points de l'itinéraire le signal normalement acheminé ou un échantillon représentatif de ce signal et à comparer entre eux les signaux ou les échantillons en ces divers points.

Dans les réseaux à large bande, le contrôle continu est difficile à mettre en œuvre du fait des contraintes techniques que suppose un fonctionnement en microsynchronisme.

Pour ce qui est du contrôle actif, l'injection d'un code en secteur réservé et sa reconnaissance dans les systèmes d'analyse imposent un traitement de tout le signal qui nécessite un dispositif particulièrement complexe et coûteux.

Un système de contrôle passif comprend essentiellement des sélecteurs de signaux établis en nombre variable dans la chaîne de connexion, et des comparateurs. L'observation directe des signaux à haut débit est pratiquement exclue, compte tenu de la complexité technologique qu'impliquent leur transmission et leur comparaison.

Par rapport aux méthodes classiques de supervision des réseaux de connexion, un nouveau paramètre est par ailleurs à prendre en compte ; il s'agit du taux d'erreurs sur la connexion contrôlée. Compte tenu des éléments constitutifs d'une chaîne de connexion large bande, il importe d'évaluer la qualité d'une connexion considérée bien établie afin d'en suivre l'évolution.

Le document DE-A-28 36 695 concerne un réseau de connexion pour signaux numériques, à plusieurs étages, de type T, S, S, S, T, dans lequel deux étages consécutifs sont reliés par des lignes intermédiaires, chaque ligne intermédiaire comportant un régénérateur. Les régénérateurs sont commandés par un signal d'horloge à travers des dispositifs à retard dont le retard est d'autant plus grand que les régénérateurs sont plus éloignés de l'entrée du réseau de connexion, le retard étant nul pour les régénérateurs situés près de ladite entrée. En faisant abstraction des étages temporels à l'entrée et à la sortie, on retrouve les éléments du préambule de la revendication 1 dans ce document.

Les documents EP-A-0 056 600 et EP-A-0 027 226 concernent chacun le contrôle d'un réseau de connexion à l'aide d'un dispositif de contrôle d'itinéraire par comparaison bit à bit des signaux numériques prélevés en deux points d'un chemin de transmission ; le réseau de connexion de chacun de ces deux documents ne comporte aucun régénérateur.

L'invention a pour but la réalisation d'un réseau de connexion apte à commuter des signaux numériques à haut débit, et d'un dispositif de contrôle des signaux numériques à haut débit.

L'invention a pour objet un réseau de connexion spatial pour signaux numériques à haut débit, à plusieurs étages, relié en entrée à des lignes entrantes et en sortie à des lignes sortantes dans lequel au moins deux étages consécutifs sont reliés par un ensemble de lignes intermédiaires, chaque étage comportant des matrices de connexion, ledit réseau comportant des modules régénérateurs en entrée et en sortie, et dans chaque ligne intermédiaire les modules régénérateurs à l'entrée et à la sortie étant reliés aux lignes entrantes et sortantes, caractérisé par le fait qu'il comprend des modules régénérateurs à chaque extrémité des lignes intermédiaires et que chaque module régénérateur comporte des moyens de récupération de rythme à partir de l'information numérique qu'il reçoit, lesdits modules régénérateurs corrigeant les détériorations des signaux numériques dues au passage dans les lignes entrantes les matrices de connexion et les lignes intermédiaires.

Le réseau de connexion de l'invention permet la commutation de signaux numériques à des débits élevés, de l'ordre de 100 M bit/s ou plus. Il met en œuvre une technologie performante et prend en compte les contraintes liées au traitement de trains numériques rapides : liaisons inte-rétages, régénérations des signaux en différents points du réseau, système de contrôle de bon fonctionnement (supervision) basé sur un contrôle passif par prélèvement d'échantillons en différents points de régénération et comparaison entre les échantillons du signal numérique prélevé aux deux extrémités d'un tronçon d'un chemin dans le réseau de connexion, les échantillons étant comparés bit à bit, le dispositif de contrôle permettant de s'affranchir des dispersions de temps de propagation dans le réseau de connexion.

Le réseau de connexion spatial de l'invention comprend deux parties principales :

— un ensemble de commutation avec les dispositifs de régénération des signaux,

— un système de supervision.

On va décrire un mode de réalisation préféré de l'invention, donné à titre d'exemple non limitatif et illustré par les figures annexées dans lesquelles :

— la figure 1 représente le réseau de connexion spatial pour signaux numériques à haut débit de l'invention,

— la figure 2 représente un groupe de sélection de la figure 1,

— la figure 3 représente une unité de troisième étage de la figure 1,

— la figure 4 représente une matrice de connexion utilisée dans les groupes de sélection et les unités de troisième étage,

— la figure 5 représente un ensemble de régénérateurs à entrées asymétriques du réseau de connexion,

— la figure 6 représente un ensemble de régénérateurs à entrées symétriques du réseau de connexion,

— la figure 7 représente un circuit de prélèvement du réseau de connexion,

— la figure 8 représente le circuit de comparaison de la figure 1.

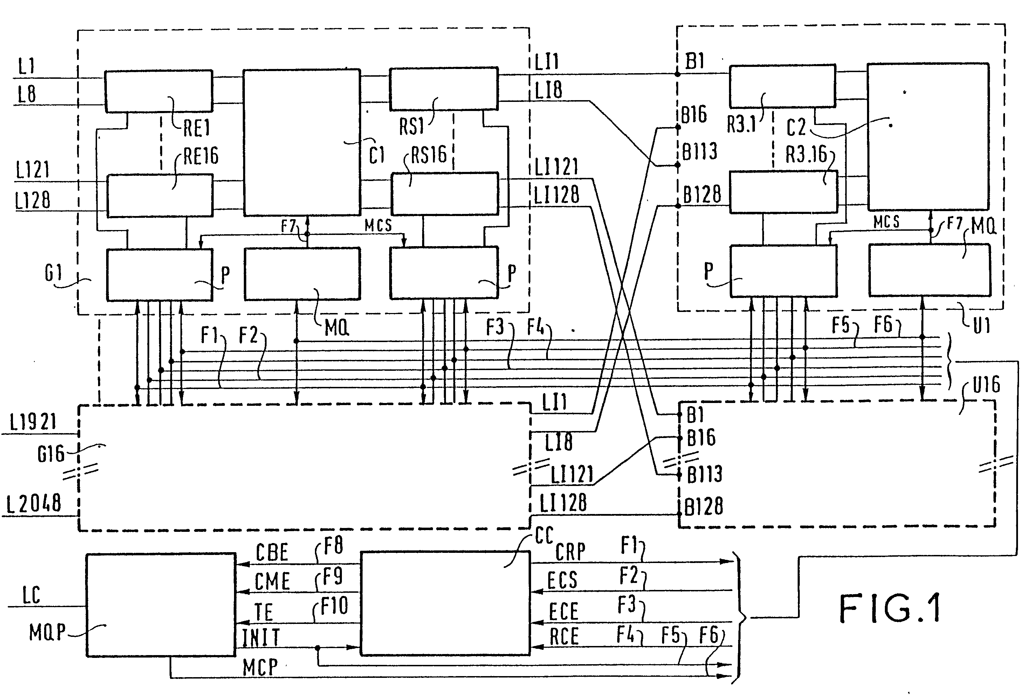

La figure 1 représente le réseau de connexion spatial pour signaux numériques à haut débit de l'invention, par exemple à 96 M bit/s, ce réseau de connexion étant à trois étages et du type replié, comme cela sera explicité lors de la description des figures annexées. Le réseau de connexion représenté figure 1 comporte des groupes de sélection G1 à G16, des unités de troisième étage U1 à U16, un marqueur principal MQP et un circuit de comparaison CC.

Chaque groupe de sélection est relié à cent vingt huit liaisons, bidirectionnelles, L1 à L128 pour le groupe de sélection G1 et L1921 à L2048 pour le groupe de sélection G16, chaque liaison ayant une ligne entrante et une ligne sortante pour l'entrée et la sortie des informations dans le réseau de connexion. Chaque groupe de sélection G1 à G16 est relié aux unités de troisième étage U1 à U16, par cent vingt huit liaisons intermédiai-res LI1 à LI128 qui acheminent les informations dans les deux sens.

Un groupe de sélection comporte un premier circuit de connexion C1, des groupes de régénérateurs RE, RS, un marqueur auxiliaire MQ, et deux dispositifs de prélèvement P. Les liaisons L1 à L128 sont reliées au premier circuit de connexion C1 par seize groupes de régénérateurs RE1 à RE16 soit huit liaisons par groupe de régénérateurs. Les liaisons intermédiaires LI1 à LI128 sont reliées au premier circuit de connexion C1 par seize groupes de régénérateurs RS1 à RS16, soit huit liaisons intermédiaires par groupe de régénérateurs. Le marqueur auxiliaire MQ est relié par une ligne F7 aux deux dispositifs de prélèvement P et au premier circuit de connexion C1 ; le marqueur auxiliaire MQ délivre par la ligne F7 des messages série MCS.

Les seize groupes de régénérateurs RE1 à RE16 reliés aux liaisons L1 à L128 sont également reliés à l'un des dispositifs de prélèvement, et les seize groupe de régénérateurs RS1 à RS16 reliés aux liaisons intermédiaires LI1 à LI128 sont reliés à l'autre circuit de prélèvement.

Une unité de troisième étage comporte un deuxième circuit de connexion C2, seize groupes de régénérateurs R3.1 à R3.16, un marqueur auxiliaire MQ et un dispositif de prélèvement P. Le marqueur auxiliaire MQ délivre par une ligne F7 des messages série MCS au deuxième circuit de connexion C2 et au circuit de prélèvement ; le dispositif de prélèvement P est relié à chaque groupe de régénérateurs. Une unité de troisième étage a cent vingt huit bornes, B1 à B128, reliées aux seize groupes de régénérateurs. Les connexions avec les groupes de sélection sont classiques. Pour l'unité de troisième étage U1, les bornes B1 à B16 sont reliées par les lignes intermédiaires LI1 aux seize groupes de sélection ; les bornes B17 à B32 sont reliées par les lignes intermédiaires LI2 aux seize groupes de sélection, ... etc., les bornes B113 à B128 étant reliées par les lignes intermédiaires LI8 aux seize

groupes de sélection. Pour l'unité de troisième étage U2, les bornes de celles-ci sont reliées par les lignes intermédiaires LI9 à LI16 aux seize groupes de sélection, l'unité de troisième étage U16 étant reliée par les lignes intermédiaires LI121 à LI128 aux seize groupes de sélection.

Le marqueur principal MQP est relié à un calculateur central par une liaison LC ; le calculateur central, qui pilote le réseau de connexion, détermine les paramètres de chaque itinéraire permettant de relier deux liaisons bidirectionnelles quelconques Li et Lj à travers le réseau de connexion, et élabore les messages de marquage destinés à activer les points de connexion concernés dans les premier et deuxième circuits de connexion C1 et C2. Le marqueur principal MQP délivre, par une ligne F6, des messages de marquage MCP aux marqueurs auxiliaires MQ des groupes de sélection et des unités de troisième étage, et par une ligne F5 un signal d'initialisation INIT au circuit de comparaison CC et aux dispositifs de prélèvement P des groupes de sélection et des unités de troisième étage.

Le marqueur principal MQP reçoit du circuit de comparaison CC un signal connexion bien établie CBE par un fil F8, un signal connexion mal établie CME par un fil F9, et un signal taux d'erreurs TE par un fil F10.

Les dispositifs de prélèvement P des groupes de sélection G1 à G16 et des unités de troisième étage U1 à U16 sont reliés au circuit de comparaison CC par des lignes F1, F2, F3, F4 ; les dispositifs de prélèvement délivrent sur la ligne F2 un signal échantillons à la sortie ECS, sur la ligne F3 un signal échantillons à l'entrée ECE, les échantillons étant prélevés en entrée et en sortie d'un tronçon à contrôler, et sur la ligne F4 un signal de rythme RCE associé au signal échantillons à l'entrée ; le signal de rythme pourrait être associé au signal échantillon à la sortie, le choix étant fait une fois pour toutes à la construction. Le circuit de comparaison CC délivre aux circuits de prélèvement, par la ligne F1, un signal de commande de réglage de phase CRP.

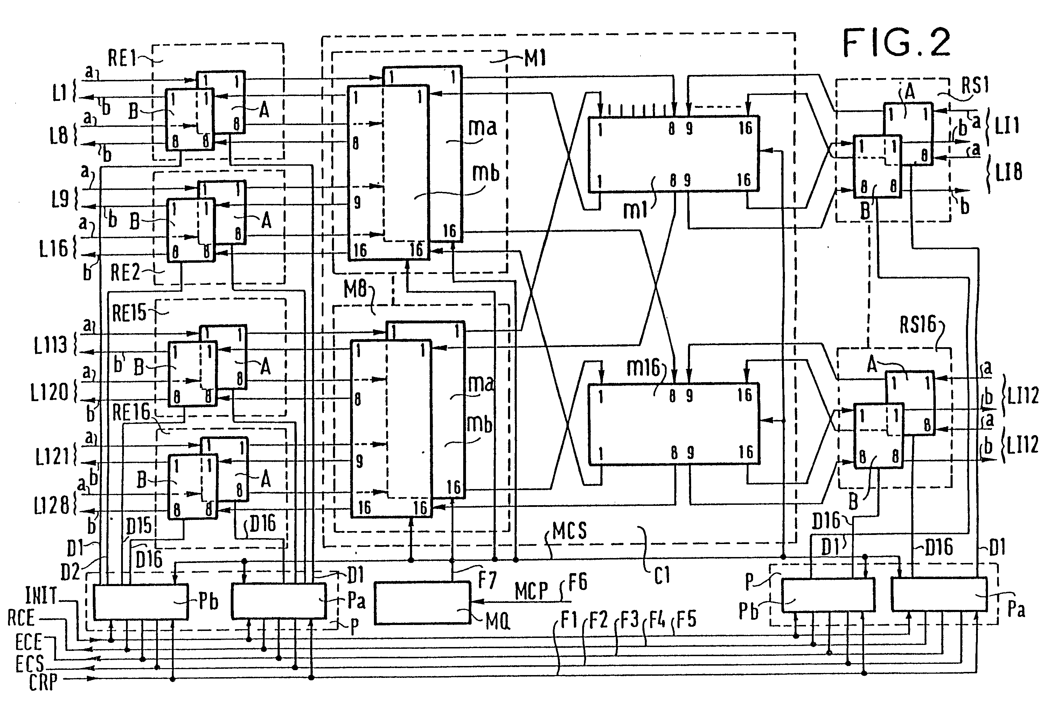

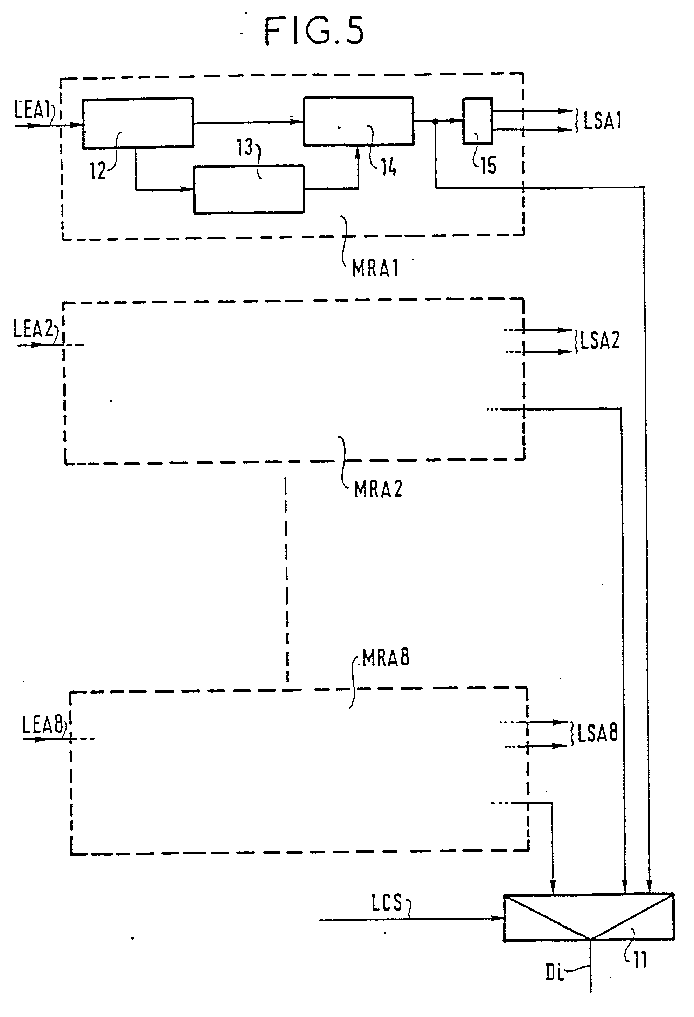

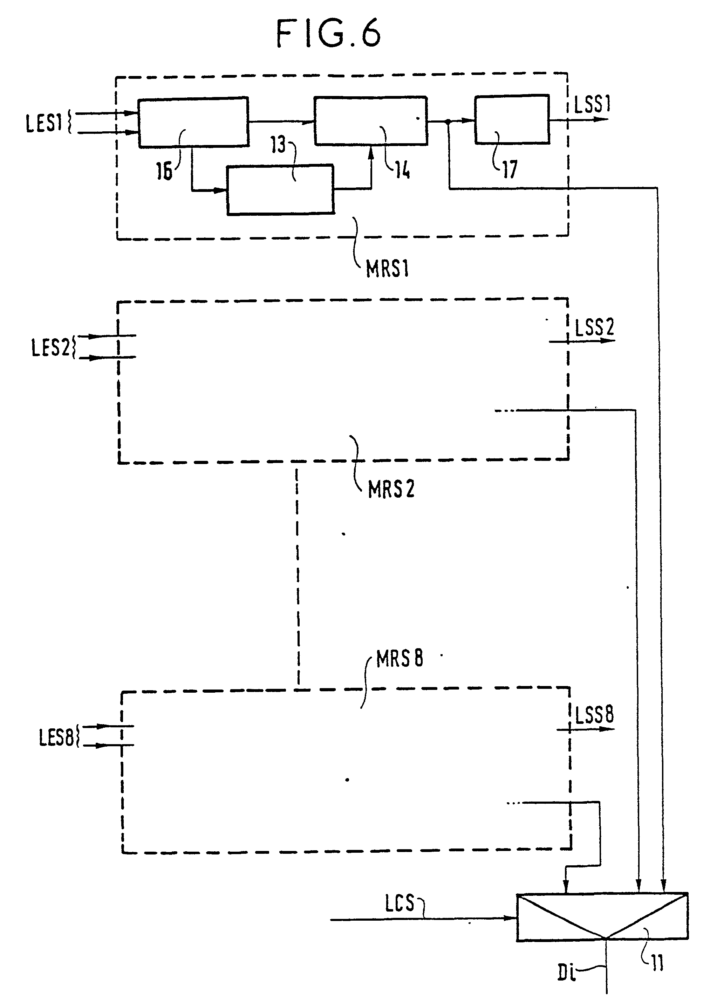

La figure 2 représente le groupe de sélection G1 de la figure 1. Chaque groupe de régénérateurs RE1 à RE16 et RS1 à RS16 est constitué par deux ensembles de régénérateurs A et B, chaque ensemble comportant huit régénérateurs comme représenté figures 5 et 6. Les dispositifs de prélèvement P comportent chacun deux circuits de prélèvement Pa et Pb, identiques ; les circuits de prélèvement Pa et Pb sont reliés par des liaisons D1 à D16 aux ensembles de régénérateurs A et B, respectivement, des groupes de régénérateurs, RE1 à RE16, ou RS1 à RS16, associés aux dispositifs de prélèvement P. Chaque circuit de prélèvement Pa et Pb est relié aux lignes F1 à F5.

Chaque liaison L1 à L128 est constituée par deux lignes a et b affectée chacune à un sens de transmission, les lignes a acheminant les informations entrant dans le réseau de connexion donc dans les groupes de sélection et les lignes b acheminant les informations sortant du réseau de connexion donc des groupes de sélection ; les lignes a des liaisons sont reliées aux ensembles de régénérateurs A, les lignes b étant reliées aux ensembles de régénérateurs B.

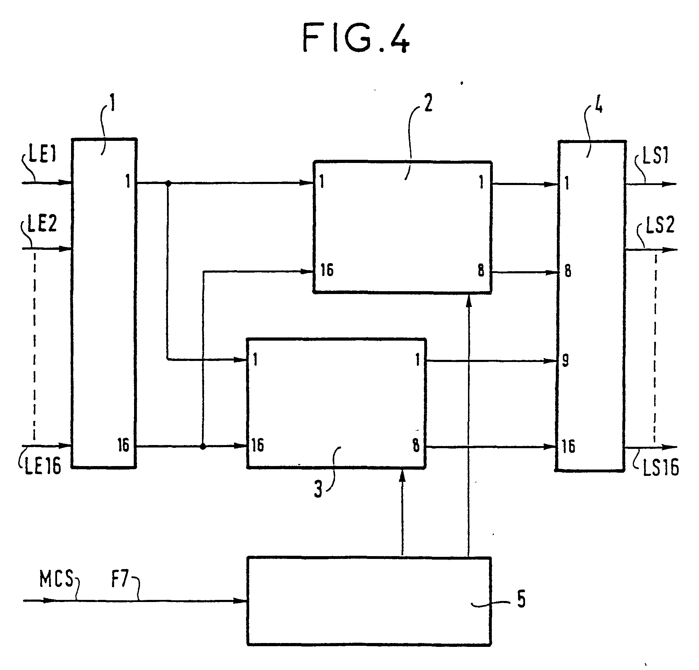

Le premier circuit de connexion C1 comporte deux étages de commutation, le premier étage étant constitué par des matrices doubles M1 à M8, le second étage étant constitué par des matrices m1 à m16 ; chaque matrice double M1 à M8 est constituée par deux matrices ma et mb. Les matrices ma, mb, m1 à m16 sont identiques et comportent chacune seize entrées et seize sorties ; la figure 4 représente le schéma d'une matrice. Chaque matrice double est reliée à deux groupes de régénérateurs ; la matrice double est reliée à deux groupes de régénérateurs ; la matrice double M1 est reliée aux groupes de régénérateurs RE1 et RE2, la matrice double M8 étant reliée aux groupes de régénérateurs RE15 et R16. Dans une matrice double, les matrices ma et mb sont affectées chacune à un sens de transmission, la matrice ma ayant ses seize entrées reliées aux deux ensembles de régénérateurs A et la matrice mb ayant ses seize sorties reliées aux deux ensembles de régénérateurs B des deux groupes de régénérateurs associés à la matrice double. Chaque matrice m1 à m16 du deuxième étage est reliée en entrée à chacune des matrices ma des huit matrices doubles M1 à M8, et en sortie à chacune des matrices mb des matrices doubles M1 à M8. Chaque matrice m1 à m16 du deuxième étage est reliée à un groupe de régénérateurs RS1 à RS16, respectivement, une matrice étant reliée en entrée à l'ensemble de régénérateurs A du groupe de régénérateurs qui lui est associé, et en sortie à l'ensemble de régénérateurs B du groupe de régénérateurs associé. Les liaisons intermédiaires LI1 à LI128 sont constituées par deux fils a et b, les fils a acheminant les informations en provenance des unités de troisième étage U1 à U16, les fils b acheminant les informations à destination des unités de troisième étage.

Le marqueur auxiliaire MQ est relié par la ligne F7 à chacune des matrices ma et mb des matrices doubles M1 à M8, et à chacune des matrices m1 à m16, ainsi qu'à chacun des circuits de prélèvement Pa et Pb des dispositifs de prélèvement P.

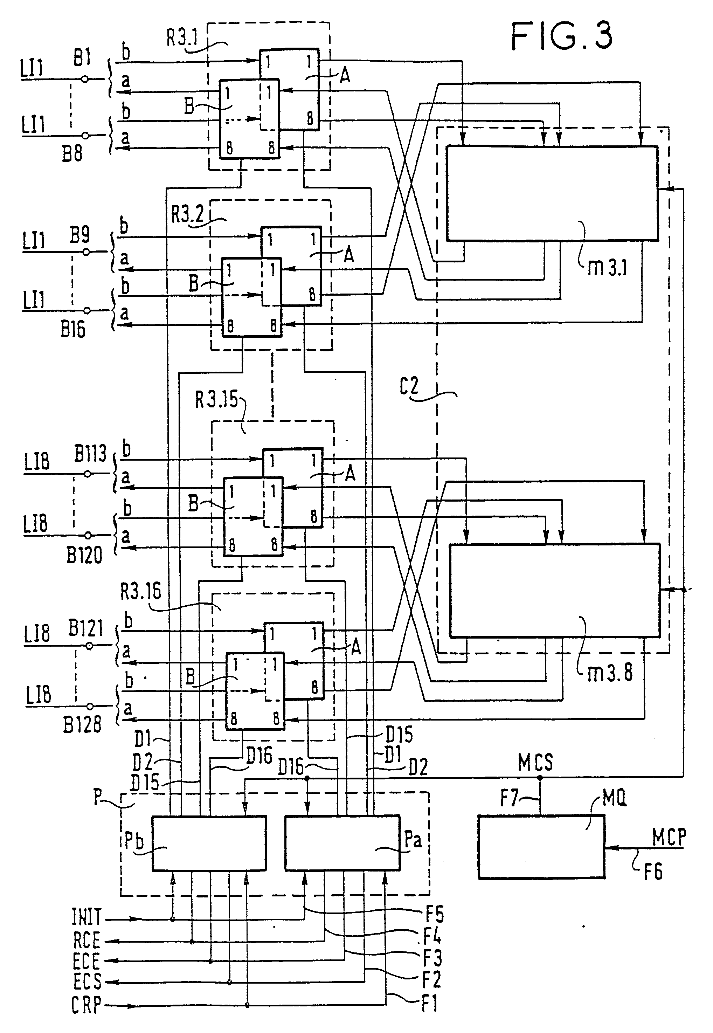

La figure 3 représente une unité de troisième étage, par exemple l'unité de troisième étage U1.

Les groupes de régénérateurs R3.1 à R3.16 sont constitués, comme les groupes de régénérateurs RE et RS des groupes de sélection (figure 2), par deux ensembles de régénérateurs A et B. Les bornes B1 à B16 sont reliées aux seize groupes de sélection par les liaisons intermédiaires LI1, chaque borne étant reliée à un groupe de sélection. Les bornes B113 à B128 sont reliées aux seize groupes de sélection par les liaisons intermédiaires LI8, chaque borne étant reliée à un groupe de sélection. Les liaisons intermédiaires étant constituées chacune par deux fils a et b, comme indiqué lors de la description de la figure 2, les fils a sont reliés aux ensembles de régénérateurs B et les fils b aux ensembles de régénérateurs A ; les fils b acheminent les informations entrant dans l'unité de troisième étage, les fils a acheminant les informations sortant de l'unité de troisième étage.

Le deuxième circuit de connexion C2 est constitué de huit matrices m3.1 à m3.8, identiques aux matrices m1 à m16, ma et mb du premier circuit de connexion C1. Chaque matrice est reliée en entrée aux ensembles de régénérateurs A et en sortie aux ensembles de régénérateurs B de deux groupes de régénérateurs consécutifs. La matrice m3.1 est donc reliée aux deux groupes de régénérateurs R3.1 et R3.2, la matrice m3.2 est reliée aux deux groupes de régénérateurs suivants, la matrice m3.8 étant reliée aux groupes de régénérateurs R3.15 et R3.16. Le dispositif de prélèvement P comporte deux circuits de prélèvement Pa et Pb, comme les dispositifs de prélèvement des groupes de sélection. Les circuits de prélèvement Pa et Pb sont reliés chacun par des liaisons D1 à D16 aux groupes de régénérateurs, le circuit de prélèvement Pa étant relié aux ensembles de régénérateurs A, le circuit de prélèvement Pb étant relié aux ensembles de régénérateurs B. Les circuits de prélèvement Pa et Pb sont reliés chacun aux lignes F1 à F5. Le marqueur auxiliaire MQ est relié à la ligne F6, et par la ligne F7 aux circuits de prélèvement Pa et Pb et aux matrices m3.1 à m3.8.

La figure 4 représente une matrice, à seize entrées et seize sorties, constituée par un ensemble de récepteurs 1, deux matrices élémentaires 2 et 3, un ensemble d'émetteurs 4 et un circuit de commande 5. L'ensemble de récepteurs comporte seize récepteurs, chaque récepteur recevant des signaux symétriques par une ligne bifilaire entrante, LE1 à LE16, et restituant des signaux à des niveaux logiques ECL (Emetter Coupled Logic) sur un fil ; un récepteur émet un signal de valeur 1 si son entrée positive est à une tension supérieure à son entrée négative, et un signal de valeur 0 dans le cas contraire. La sortie de chaque récepteur est reliée à une entrée des deux matrices élémentaires 2 et 3 qui ont chacune seize entrées et huit sorties. L'ensemble d'émetteurs 4 comporte seize émetteurs, chaque émetteur étant relié à une sortie des matrices élémentaires, et en recevant par un fil un signal à un niveau logique ECL ; chaque émetteur délivre deux signaux symétriques, l'un étant l'inverse de l'autre, à des niveaux ECL, sur les deux fils d'une ligne bifilaire sortante, LS1 à LS16. Le circuit de commande 5 est relié en entrée à la ligne F7 par laquelle il reçoit, du marqueur auxiliaire qui le commande, des messages série MCS ; il est relié en sortie à chacune des matrices élémentaires pour établir, ou rompre, les connexions entre les entrées et les sorties des matrices élémentaires.

La figure 5 représente un ensemble de régénérateurs A des figures 2 et 3 ; un tel ensemble de régénérateurs est constitué par huit modules régénérateurs à entrée asymétrique, MRA1 à MRA8, et un sélecteur 11. Chaque module régénérateur comprend : un dispositif d'adaptation 12, relié en entrée à une ligne coaxiale, incluant un égaliseur fixe de type connu qui compense les irrégularités d'affaiblissement en fonction de la fréquence pour une paire coaxiale de longueur moyenne, un récupérateur de rythme 13, de type connu et par exemple réalisé sur la base d'un filtre sélectif passif tel qu'un filtre à ondes de surface, un circuit de recalage en phase 14 qui est par exemple une simple bascule de type D, et un émetteur 15 délivrant des signaux symétriques sur une ligne bifilaire. Le dispositif d'adaptation 12 est relié en sortie au circuit de recalage en phase 14, lui-même relié en sortie à l'émetteur 15 ; le récupérateur de rythme 13, est relié en entrée au dispositif d'adaptation 12, et délivre un signal d'horloge récupérée qui commande le circuit de recalage en phase 14.

Le sélecteur 11 a huit entrées reliées chacune à la sortie du circuit de recalage en phase 14 d'un module régénérateur ; le sélecteur est relié en sortie, par une liaison Di, au circuit de prélèvement Pa auquel il est associé (figures 2 et 3) ; une entrée commande du sélecteur est également reliée au circuit de prélèvement Pa par une ligne de commande de sélection LCS.

Les dispositifs d'adaptation 12 sont reliés en entrée à des lignes coaxiales entrantes LEA1 à LEA8, respectivement, et les émetteurs sont reliés en sortie à des lignes bilifaires sortantes LSA1 à LSA8, respectivement.

Par commande sur la ligne de commande de sélection LCS, le circuit de prélèvement Pa sélectionne une entrée du sélecteur 11, c'est-à-dire un module régénérateur ; le signal numérique délivré par le circuit de recalage en phase 14 de ce module régénérateur est alors transmis par la liaison Di au circuit de prélèvement Pa, qui reçoit ainsi le signal numérique à 96 Mbit/s.

La figure 6 représente un ensemble de régénérateurs B des figures 2 et 3 ; un tel ensemble de régénérateurs est constitué par huit modules régénérateurs à entrée symétrique, MRS1 à MRS8, et un sélecteur 11. Chaque module régénérateur comprend : un récepteur de ligne 16, un récupérateur de rythme 13, un circuit de recalage en phase 14 et un amplificateur d'émission 17. Les récepteurs de ligne sont reliés en entrée à des lignes bifilaires entrantes LES1 à LES8, respectivement, et les amplificateurs d'émission 17 sont reliés en sortie à des lignes coaxiales sortantes LSS1 à LSS8.

Le sélecteur 11 a huit entrées reliées chacune à la sortie du circuit de recalage en phase 14 d'un module régénérateur ; le sélecteur est relié en sortie, par une liaison Di au circuit de prélèvement Pb auquel il est associé (figure 2 et 3) ; une entrée commande du sélecteur est relié au circuit de prélèvement Pb par la ligne de commande de sélection LCS. Par commande sur la ligne de commande sélection LCS, le circuit de prélèvement Pb sélectionne une entrée du sélecteur 11, c'est-à-dire un module régénérateur ; le signal numérique délivré par le circuit de recalage en phase 14 de ce module régénérateur est alors transmis par la liaison Di au circuit de prélèvement Pb qui reçoit ainsi le signal numérique à 96 Mbit/s.

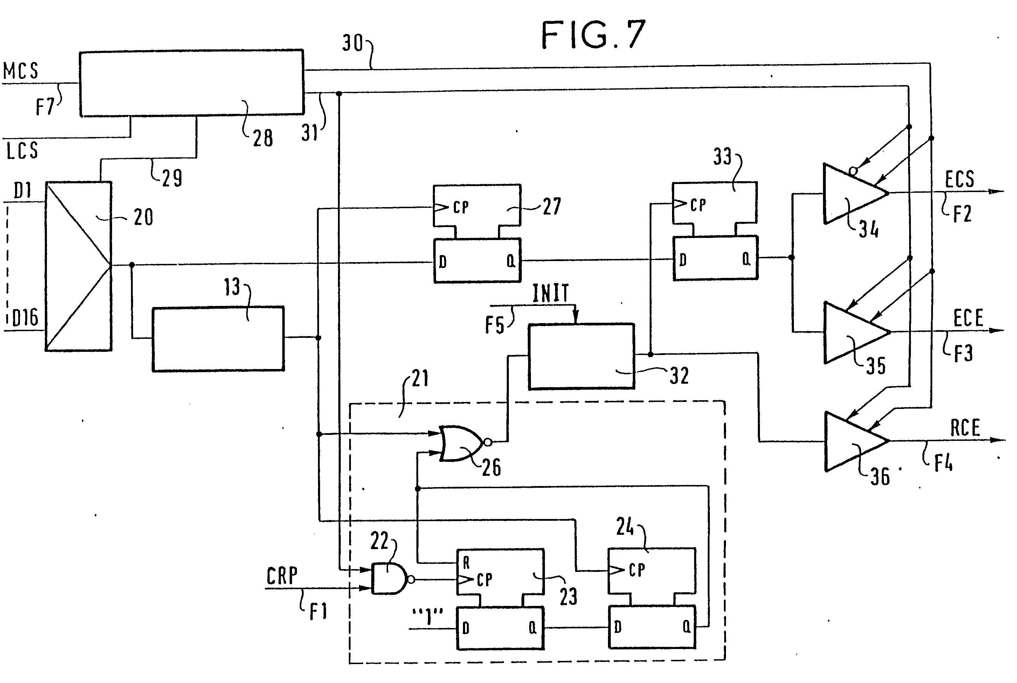

La figure 7 représente un circuit de prélèvement, Pa ou Pb, des figures 2 et 3. Un circuit de commande 28 est relié en entrée, par la ligne F7, au marqueur auxiliaire MQ qui le commande, la ligne F7 acheminant des messages série MCS qui indiquent au circuit de commande si le circuit de prélèvement est concerné, c'est-à-dire si un prélèvement doit être effectué sur un des modules régénérateurs reliés au circuit de prélèvement, si le module régénérateur concerné est en début ou en fin de tronçon surveillé, le numéro de module régénérateur, et le numéro de la liaison Di reliant le circuit de prélèvement au sélecteur 11 de l'ensemble de régénérateurs auquel appartient le module régénérateur concerné (figures 4 et 5).

Si le message série concerne le circuit de prélèvement, le circuit de commande 28 délivre sur un fil 30 un signal de valeur 1 ; le circuit de prélèvement délivre un signal de valeur 0 sur un fil 31, si le prélèvement a lieu en début de tronçon surveillé, et de valeur 1 si le prélèvement a lieu en fin de tronçon surveillé. Le circuit de commande délivre également, à partir du message série, des instructions pour effectuer le prélèvement ; sur la ligne de commande de sélection LCS qui le relie aux seize sélecteurs 11, il délivre un mot de trois bits qui est, dans un ensemble de régénérateurs A ou B, le numéro de module régénérateur concerné par le prélèvement ; sur une liaison 29 qui le relie à une entrée de commande d'un sélecteur 20, il délivre un mot de quatre bits correspondant au numéro d'une liaison Di parmi les liaisons D1 à D16 qui relient les sélecteurs 11 à l'entrée du sélecteur 20 (il s'agit bien évidemment des sélecteurs des seize ensembles de régénérateurs, A ou B, associés au circuit de prélèvement). Ainsi lorsque le circuit de prélèvement est concerné par un prélèvement, il sélectionne, par la ligne de commande de sélection LCS, un module régénérateur, cette sélection étant faite sur tous les sélecteurs 11 des ensembles de régénérateurs commandés par le circuit de prélèvement ; par la liaison 29 il sélectionne une liaison Di parmi les liaisons D1 à D16, de sorte que seul le signal numérique provenant du module régénérateur sélectionné par la liaison de commande de sélection LCS et dont le sélecteur 11 est relié par la liaison Di au sélecteur 20, est pris en compte par le circuit de prélèvement.

La sortie du sélecteur 20 est reliée d'une part à l'entrée d'une bascule 27, de type D, et d'autre part à l'entrée d'un récupérateur de rythme 13. La sortie du récupérateur de rythme 13 est reliée à l'entrée horloge de la bascule 27, et à un circuit de réglage de phase 21 qui comprend une porte ET-NON 22, deux bascules 23, 24, de type D, et une porte OU-NON 26. La porte ET-NON 22 a une entrée reliée au fil 31 et une autre entrée reliée à la ligne F1 par laquelle elle reçoit un signal de réglage de phase CRP du circuit de comparaison CC ; la sortie de la porte ET-NON 22 est reliée à l'entrée horloge de la bascule 23 qui reçoit un signal permanent de valeur 1 sur son entrée information. La sortie de la bascule 23 est reliée à l'entrée information de la bascule 24 dont l'entrée horloge est reliée à la sortie du récupérateur de rythme 13. La sortie de la bascule 24 est reliée à une entrée de remise à zéro de la bascule 23 et à une entrée de la porte OU-NON 26 dont une autre entrée est reliée à la sortie du récupérateur de rythme. La sortie de la porte OU-NON 26 est reliée à l'entrée d'un diviseur 32 qui est un diviseur par 256, dont une entrée initialisation est reliée au fil F5 par lequel elle reçoit le signal d'initialisation INIT du marqueur principal MQP. La sortie du diviseur 32 est reliée à l'entrée horloge d'une bascule 33, de type D, dont l'entrée information est reliée à la sortie de la bascule 27. La sortie de la bascule 33 est reliée à l'entrée de deux amplificateurs 34 et 35, un troisième amplificateur 36 ayant son entrée reliée à la sortie du diviseur 32. Les amplificateurs 34, 35, 36 sont des amplificateurs à trois états de sortie : niveau logique 0, niveau logique 1, haute impédance ; ils ont chacun deux entrées de commande reliées aux fils 30 et 31, l'amplificateur 34 ayant une entrée inverseuse reliée au fil 31. La sortie de l'amplificateur 34 est reliée à la ligne F2 et délivre le signal « échantillons à la sortie » ECS ; la sortie de l'amplificateur 35 est reliée à la ligne F3 et délivre le signal « échantillons à l'entrée » ECE ; la sortie de l'amplificateur 36 est reliée à la ligne F4 et délivre le signal de rythme RCE. Si le circuit de prélèvement n'est pas concerné, le fil 30 délivre un signal de valeur 0 et les trois amplificateurs sont à l'état haute impédance. Si le circuit de prélèvement est concerné par le prélèvement, le signal sur le fil 30 a la valeur 1, le signal sur le fil 31 ayant soit la valeur 1 si le prélèvement a lieu en fin de tronçon surveillé, c'est-à-dire si le module régénérateur concerné par le prélèvement et associé au circuit de prélèvement est situé en fin de tronçon surveillé, soit la valeur 0 si le prélèvement a lieu en début de tronçon surveillé, donc si le module régénérateur concerné et associé au circuit de prélèvement est situé au début du tronçon surveillé. Les signaux des fils 30 et 31 commandant les amplificateurs, l'un des amplificateurs 34 ou 35 passe au niveau logique 0, et l'amplificateur 36 ne passe au niveau logique 0 que si le prélèvement a lieu en début de tronçon surveillé.

Le diviseur 32 est initialisé, ainsi d'ailleurs que tous les diviseurs des circuits de prélèvement.

On supposera que le circuit de prélèvement est concerné par un prélèvement en sortie de tronçon surveillé ; son fonctionnement est alors le suivant.

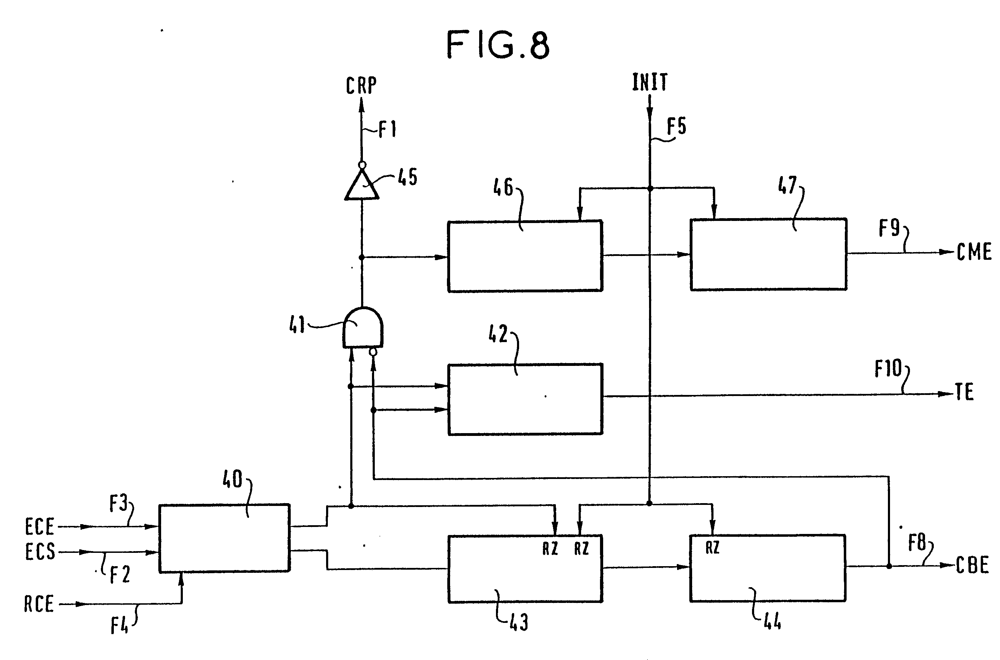

Le signal sur le fil 30 a la valeur 1 et le signal sur le fil 31 a la valeur 1. Le sélecteur 20 reçoit du module régénérateur situé à l'entrée du tronçon surveillé le signal numérique à 96 M bit/s acheminé par ledit module régénérateur. Le récupérateur de rythme 13 délivre un signal d'horloge récupérée à partir du signal numérique qu'il reçoit et commande la bascule 27 qui effectue une remise en phase du signal numérique qu'elle reçoit du sélecteur 20. La porte ET-NON 22 reçoit un signal de niveau 1 par le fil 31 pendant toute la durée du prélèvement, c'est-à-dire du contrôle du fonctionnement du tronçon surveillé ; en l'absence de signal de correction de phase CRP, la porte ET-NON 22 reçoit par la ligne F1 un signal de niveau 1 ; la sortie de la porte 22 est donc au niveau 0 et la porte OU-NON 26 qui reçoit de la bascule 24 un signal de niveau 0 laisse passer le signal d'horloge récupérée délivré par le récupérateur de rythme 13. Le diviseur 32 qui a été initialisé par le signal d'initialisation INIT délivre une impulsion toutes les deux cent cinquante six impulsions du signal d'horloge récupérée. La bascule 33 qui reçoit le signal numérique à 96 M bits/s de la bascule 27 est commandée par le diviseur 32 et délivre donc un bit sur 256 du signal numérique ; ce bit est appliqué à l'entrée de l'amplificateur 34 et acheminé par la ligne F2 vers le circuit de comparaison. Lorsque le circuit de comparaison CC détecte un bit en anti-coïncidence, par comparaison entre un bit du signal numérique à l'entrée du tronçon surveillé et un bit du signal numérique à la sortie du tronçon surveillé il délivre un signal commande de réglage de phase CRP (le circuit de comparaison CC est représenté figure 8) sur la ligne F1, ce signal ayant un niveau 0. La porte ET-NON 22 passe au niveau 1, les sorties des bascules 23 et 24 passent au niveau 1, la bascule 23 repasse au niveau 0 puis la bascule 24 ; la sortie de la bascule 24 est restée au niveau 1 pendant une période du signal d'horloge récupérée et a inhibé la porte OU-NON 26 de sorte qu'une impulsion du signal d'horloge récupérée n'a pas été transmise au diviseur 32. De cette manière le circuit de réglage de phase 21 introduit un déphasage dans la commande de la bascule 33 celle-ci effectuant un échantillonnage du signal numérique.

Lorsque le circuit de prélèvement de la figure 7 concerne un prélèvement à l'entrée du tronçon surveillé, la porte ET-NON 22 reçoit par le fil 31 un signal de niveau 0 et sa sortie est au niveau 1 quel que soit le niveau du signal commande de réglage de phase CRP ; la sortie de la bascule 24 est au niveau 0 et la porte OU-NON 26 laisse passer le signal d'horloge récupérée. Dans ce cas il n'y a donc aucun réglage de phase dans l'échantillonnage du signal numérique par la bascule 33 et l'amplificateur 35 délivre sur la ligne F3 les bits du signal numérique échantillonné par la bascule 33.

La figure 8 représente le circuit de comparaison CC de la figure 1. Ce circuit de comparaison compare les échantillons prélevés en début et en fin d'un tronçon surveillé par les circuits de prélèvement (figure 7). Un comparateur 40 est relié en entrée aux lignes F2 et F3 par lesquelles il reçoit un signal « échantillons à la sortie » ECS et un signal « échantillons à l'entrée » ECE ; il est également relié à la ligne F4 par laquelle il reçoit le signal de rythme RCE du circuit de prélèvement associé au module régénérateur situé à l'entrée du tronçon surveillé. Une sortie « coïncidence » du comparateur 40 est reliée à l'entrée d'un compteur de coïncidences 43 dont la sortie est reliée à un comparateur 44. Lorsque le nombre de coïncidences comptabilisées par le compteur de coïncidences atteint une certaine valeur, 31 par exemple, le comparateur 44 délivre un signal « connexion bien établie », CBE. La sortie du comparateur 44 est reliée au fil F8 (figure 1) ; elle est également reliée d'une part à une entrée de commande d'un compteur d'erreurs 42 reliée d'une part à une entrée de commande d'un compteur d'erreurs 42 relié en sortie au fil F10, et d'autre part, à une entrée inverseuse d'une porte ET 41. Une sortie « anticoïncidence » du comparateur 40 est reliée à une autre entrée de la porte ET 41, à l'entrée du compteur d'erreurs 42, et à une entrée de remise à zéro du compteur de coïncidences 43. La sortie de la porte ET 41 est reliée d'une part à la ligne F1 par un inverseur 45 et d'autre part à l'entrée d'un compteur d'anti-coïncidences 46 relié en sortie à un comparateur 47 qui délivre sur le fil F9 un signal « connexion mal établie » CME lorsque le nombre d'anticoïncidences comptabilisées par le compteur de coïncidences 46 atteint une certaine valeur, 63 par exemple. La ligne F5 est reliée à une entrée de remise à zéro du compteur d'anticoïncidences 46, du comparateur 47, du compteur de coïncidences 43 et du comparateur 44 ; le signal d'initialisation INIT acheminé par la ligne F5 est délivré par le marqueur principal MQP (figure 1) au début d'un contrôle d'un tronçon du réseau de connexion.

Le comparateur 40 compare en permanence les signaux d'échantillonnage à l'entrée et à la sortie du tronçon surveillé ; le signal « échantillons à l'entrée » ECE est délivré par un circuit de prélèvement, et le signal « échantillons à la sortie », ECS, est délivré par un autre circuit de prélèvement ; ces signaux sont acheminés par les lignes F2 et F3 au comparateur 40, qui délivre en sortie :

— lorsqu'il y a coïncidence, une impulsion positive au compteur de coïncidences 43 et un niveau logique 0 à l'entrée de la porte ET 41,

— lorsqu'il n'y a pas coïncidence, une impulsion positive à l'entrée de la porte ET 41, et un niveau logique 0 au compteur de coïncidences 43.

Au début d'une opération de contrôle, le signal d'initialisation INIT remet à zéro le comparateur d'anticoïncidences 46, le compteur de coïncidences 43 et les comparateurs 44 et 47, dont les signaux « connexion bien établie », CBE, et « connexion mal établie », CME, ont pour valeur 0.

Le signal d'initialisation INIT synchronise également les diviseurs 23 (figure 7) de tous les circuits de prélèvement. Trois processus sont à distinguer : recherche de phase, confirmation de phase, comptage d'erreurs.

Processus de recherche de phase.

Le signal de sortie du comparateur 44 étant au niveau logique 0, la porte ET 41 laisse passer toutes les impulsions d'anticoïncidences délivrées par le comparateur 40. Au départ les diviseurs 23, des circuits de prélèvement sont dans un certain état de phase et quelques coïnoidences peuvent être comptabilisées par le compteur de coïncidences 43 du fait du caractère binaire des signaux échantillonnés à l'entrée et à la sortie du tronçon ; mais rapidement une anticoïncidence apparaît, et le comparateur 40 délivre un signal d'anticoïncidence qui remet le compteur de coïncidences 43 à zéro, provoque un décalage de phase dans le circuit de prélèvement affecté à la sortie du tronçon surveillé par le signal de commande de réglage de phase, CRP, acheminé par la ligne F1 ; enfin le compteur d'anticoïncidences 46 comptabilise l'anticoïncidence décelée par le comparateur 40. Le processus de recherche de phase se répète ainsi à plusieurs reprises jusqu'à obtenir une phase d'échantillonnage des mêmes bits en entrée et en sortie du tronçon surveillé. Le comparateur 47 compare en permanence la sortie du compteur d'anticoïncidences 46 à une valeur maximale de 63 par exemple. Si cette valeur maximale est atteinte le comparateur 47 délivre un signal « connexion mal établie », CME, et l'opération de contrôle en cours est terminée.

Processus de confirmation de phase.

Les impulsions de coïncidence délivrées par le comparateur 40 sont comptabilisées par le compteur de coïncidences 43 qui est remis à zéro par la première anticoïncidence détectée. La sortie du compteur de coïncidences 43 est comparée en permanence par le comparateur 44 à une valeur minimale de 31 par exemple. Lorsque cette valeur est atteinte, un signal « connexion bien établie », CBE, est délivré par le comparateur, et le processus suivant peut commencer.

Processus comptage d'erreurs

Le signal « connexion bien établie », CBE, de niveau logique 1, bloque la porte ET 41 de sorte qu'aucune correction de phase n'est autorisée, et par ailleurs autorise le comptage des impulsions d'anticoïncidences par le compteur d'erreurs 42. Le nombre d'erreurs comptabilisées est disponible en permanence sur le fil F10, et transmis au marqueur principal MQP (figure 1).

Le réseau de connexion de l'invention permet de raccorder deux accès bidirectionnels quelconques, selon le fonctionnement indiqué ci-après.

Etablissement d'une communication

Un calculateur central, qui ne fait pas partie intégrante de l'invention, détermine les paramètres de l'itinéraire permettant de raccorder deux accès bidirectionnels quelconques à travers le réseau de connexion, et élabore les messages de marquage destinés à activer les points de connexion concernés dans les différentes matrices du réseau de connexion.

Ces messages émis par le calculateur central sont reçus par le marqueur principal MQP qui les interprète et émet des messages élémentaires vers les marqueurs auxiliaires MQ des groupes de sélection et des unités de 3e étage concernés ; ces marqueurs auxiliaires activent les matrices concernées, comme cela est bien connu de l'homme de l'art.

Les signaux numériques à haut débit relatifs à chaque sens de transmission se propagent dès lors dans le réseau de connexion où ils sont régénérés. En supposant par exemple que deux abonnés à connecter sont reliés aux liaisons L1 et L1921 des groupes de sélection G1 et G16 (figure 1) et que ces deux groupes de sélection sont reliés entre eux par l'intermédiaire de l'unité de troisième étage U1, les signaux numériques sont régénérés, pour le sens de transmission de la liaison L1 vers la liaison L1921 :

1. à l'entrée du groupe de sélection G1 par le module régénérateur MRA1 de l'ensemble de régénérateurs A du groupe de régénérateurs RE1 relié à la liaison L1,

2. à la sortie du groupe de sélection G1 par un module régénérateur MRS d'un ensemble de régénérateurs B dans un groupe de régénérateurs, RS1 par exemple,

3. à l'entrée de l'unité de troisième étage U1 par un module régénérateur MRA d'un ensemble de régénérateurs A dans un groupe de régénérateurs, R3.15 par exemple,

4. à la sortie de l'unité de troisième étage U1 par un module régénérateur MRS d'un ensemble de régénérateurs B dans un groupe de régénérateurs, R3.16 par exemple,

5. à l'entrée du groupe de sélection G16 par un module régénérateur MRA de l'ensemble de régénérateurs A du groupe de régénérateurs RS1,

6. à la sortie du groupe de sélection G16 par un module régénérateur MRS1 de l'ensemble de régénérateurs B du groupe de régénérateurs RE1 relié à la liaison L1921.

Pour le sens de transmission de la liaison L1921 vers la liaison L1 on aurait un trajet comparable à celui décrit ci-dessus, mais l'unité de troisième étage utilisée pourrait être différente de U1.

On a supposé ci-dessus que les deux liaisons appartenaient à deux groupes de sélection différents. Dans le cas où les deux liaisons appartiennent à un même groupe de sélection il n'y a pas utilisation d'une unité de troisième étage, puisqu'il n'y a pas à relier deux groupes de sélection entre eux ; dans ce cas les seules régénérations qui sont effectuées sont les régénérations 1 et 6 indiquées ci-dessus. En effet, dans un groupe de sélection, chaque matrice m1 à m16 (figure 2) permet de relier deux matrices doubles, M1 à M8, entre elles et par conséquent deux liaisons entre elles, ce qui évite l'utilisation d'une unité de troisième étage.

Rupture d'une communication

Le calculateur central ayant déterminé la fin d'une communication, rompt l'itinéraire établi dans le réseau de connexion en émettant vers le marqueur principal MQP un message de déconnexion, que celui-ci répercute vers les matrices par l'intermédiaire des marqueurs auxiliaires MQ.

Contrôle d'un itinéraire

Le calculateur central devant contrôler un itinéraire bidirectionnel, entre deux liaisons Li et Lj détermine les modules régénérateurs d'extrémités affectés à chacun des deux chemins de l'itinéraire bidirectionnel concerné ; il s'agit des modules régénérateurs MRAi et MRSj pour un des chemins et MRAj et MRSi pour l'autre chemin, ces modules régénérateurs étant ceux des groupes de régénérateurs REi et REj auxquels sont reliées les liaisons Li et Lj, ces groupes de régénérateurs faisant partie ou non d'un même groupe de sélection ; après avoir déterminé ces modules régénérateurs le calculateur central procède au test successif de ces deux chemins. Pour chaque test il émet vers le marqueur principal MQP un message de mise en test comportant les adresses des modules régénérateurs du chemin ; le marqueur principal MQP émet un message de marquage MCP à destination des marqueurs auxiliaires MQ concernés qui émettent chacun un message série MCS vers le circuit de prélèvement raccordé au module régénérateur concerné. Le module régénérateur MRAi est relié, dans son groupe de sélection, au circuit de prélèvement Pa, et le module régénérateur MRSj est relié, dans son groupe de sélection, au circuit de prélèvement Pb. Chaque circuit de prélèvement émet sur sa ligne de commande de sélection LCS le numéro du module régénérateur concerné ; comme indiqué lors de la description des figures 5, 6 et 7, le module régénérateur est alors relié par le sélecteur 11 de l'ensemble de régénérateurs, A ou B, auquel il appartient, au circuit de prélèvement, et par celui-ci au circuit de comparaison CC, de la figure 8. Les opérations de sélection étant effectuées, le marqueur principal MQP émet le signal d'initialisation INIT qui active le test.

Les signaux numériques d'entrée et de sortie, (modules régénérateurs MRAi et MRSj) sont échantillonnés chacun dans le circuit de prélèvement associé, comme cela a été indiqué lors de la description de la figure 7, le circuit de prélèvement Pa associé au module régénérateur MRAi délivrant un signal « échantillons à l'entrée » ECE, et le circuit de prélèvement Pb associé au module régénérateur MRSj délivrant un signal « échantillons à la sortie », ECS. Dans le circuit de prélèvement Pb, le signal « commande de réglage de phase » CRP émis par le circuit de comparaison CC permet de faire varier la phase de l'échantillonnage autorisant un glissement relatif du signal numérique à la sortie (provenant du module régénérateur MRSj) par rapport au signal numérique à l'entrée (provenant du module régénérateur MRAi) ; ce glissement relatif permet la recherche de coïncidence entre les signaux numériques à l'entrée et à la sortie. Les signaux échantillonnés, ECE et ECS, sont traités par le circuit de comparaison CC qui exécute les trois processus décrits précédemment lors de la description de la figure 8 ; ces processus sont : processus de recherche de phase, processus de confirmation de phase et processus de mesure du taux d'erreurs.

Le marqueur principal MQP lit les résultats du test délivrés par le circuit de comparaison sur les fils F8 « connexion bien établie » CBE, F9 « connexion mal établie » CME, et F10 « taux d'erreur » ; il active ensuite, si nécessaire, le test sur l'autre chemin de l'itinéraire entre les liaisons Li et Lj, ou éventuellement un test sur un itinéraire entre deux autres liaisons.

On a indiqué ci-dessus le déroulement d'un test concernant le chemin total entre les liaisons Li et Lj ; il s'agit donc là d'un test global d'un chemin dans le réseau de connexion. Mais bien évidemment il est possible de procéder par tests successifs de chaque tronçon constituant un chemin, cette procédure permettant en particulier la localisation des défauts, chaque tronçon comportant bien entendu un module régénérateur à chaque extrémité, un tronçon étant constitué par la partie du chemin compris entre deux modules régénérateurs successifs.

Il est également possible de contrôler la qualité d'un chemin, ou des deux chemins, d'un itinéraire entre deux liaisons Li et Lj pendant une durée quelconque au cours d'une communication, en mesurant les taux d'erreurs sur les tronçons constituant le, ou les, chemin.

On a décrit et représenté, uniquement à titre d'exemple non limitatif, un réseau de connexion du type replié qui est équivalent à un réseau à cinq étages, les groupes de sélection constituant deux étages dans le sens de propagation vers le troisième étage constitué par les unités de troisième étage, et deux étages dans le sens de propagation inverse ; mais bien évidemment le réseau de connexion peut comporter un nombre d'étages différent, et être ou non du type replié.

Les liaisons intermédiaires sont celles qui relient tous les commutateurs d'un étage à tous les commutateurs de l'étage suivant. Dans la figure 1, les liaisons intermédiaires sont celles qui relient tous les groupes de sélection aux unités de troisième étage ; dans les groupes de sélection l'ensemble des matrices m1 à m16 des seize groupes de sélection G1 à G16 sont les commutateurs d'un même étage, et constituent le deuxième et le quatrième étage du réseau de connexion ; les liaisons intermédiaires étant bidirectionnelles, elles sont constituées chacune par deux lignes, une pour chaque sens de propagation ; on peut donc dire qu'il y a un module régénérateur à chaque extrémité d'une ligne intermédiaire. Dans le cas d'un réseau non replié les connections intermédiaires n'étant pas bidirectionnelles sont donc des lignes intermédiaires. Ainsi conformément à l'invention, un réseau de connexion, qu'il soit ou non du type replié, comporte un module régénérateur à chaque extrémité, c'est-à-dire en entrée et en sortie, et un module régénérateur à chaque extrémité des lignes intermédiaires reliant tous les commutateurs d'un étage à tous les commutateurs d'un étage suivant, ou plus simplement à chaque extrémité des lignes intermédiaires reliant deux étages entre eux.

## Revendications

1. Réseau de connexion spatial pour signaux numériques à haut débit, à plusieurs étages, relié en entrée à des lignes entrantes (La) et en sortie à des lignes sortantes (Lb) dans lequel au moins deux étages consécutifs sont reliés par un ensemble de lignes intermédiaires (Lla, Llb), chaque étage comportant des matrices de connexion, ledit réseau comportant des modules régénérateurs (MRA, MRS) en entrée et en sortie, et dans chaque ligne intermédiaire (Lla, Llb), les modules régénérateurs à l'entrée et à la sortie étant reliés aux lignes entrantes et sortantes, caractérisé par le fait qu'il comprend des modules régénérateurs (MRA, MRS) à chaque extrémité des lignes intermédiaires (Lla, Llb) et que chaque module régénérateur comporte des moyens de récupération de rythme à partir de l'information numérique qu'il reçoit, lesdits modules régénérateurs corrigeant les détériorations des signaux numériques dues au passage dans les lignes entrantes, les matrices de connexion et les lignes intermédiaires.

2. Réseau de connexion selon la revendication 1, comportant un dispositif de contrôle passif d'itinéraire par comparaison bit à bit des signaux numériques prélevés en deux points d'un chemin de transmission qui délimitent entre eux un tronçon dudit chemin, caractérisé par le fait que les modules régénérateurs constituent des points de prélèvement du signal numérique, que le dispositif de contrôle comporte des circuits de prélèvement (Pa, Pb) reliés aux modules régénérateurs et un circuit de comparaison (CC) relié aux circuits de prélèvement, que les modules régénérateurs à l'entrée du réseau de connexion sont reliés à un premier circuit de prélèvement (Pa), les modules régénérateurs à la sortie du réseau de connexion étant reliés à un deuxième circuit de prélèvement (Pb), que chaque ensemble de lignes intermédiaires reliant deux étages du réseau de connexion est associé à un circuit de prélèvement en entrée et à un circuit de prélèvement en sortie des lignes intermédiaires, lesdits circuits de prélèvement en entrée étant reliés aux modules régénérateurs situés en entrée des lignes intermédiaires, et lesdits circuits de prélèvement en sortie étant reliés aux modules régénérateurs situés en sortie des lignes intermédiaires, que chaque circuit de prélèvement comporte des moyens d'échantillonnage (32, 33) du signal numérique prélevé et un circuit de réglage de phase (21) du signal numérique prélevé pour s'affranchir du temps de propagation du signal numérique entre les deux modules régénérateurs d'un tronçon aux extrémités duquel les prélèvements sont effectués, et que le circuit de comparaison (CC) comporte des moyens (40) pour comparer les échantillons délivrés par les circuits de prélèvement associés aux modules régénérateurs dudit tronçon, des moyens (43, 44) pour reconnaître qu'un chemin de transmission est bien établi entre l'entrée et la sortie dudit tronçon, des moyens (42) de mesure du taux d'erreurs sur ledit tronçon, et des moyens (41, 45) pour délivrer un signal de commande de réglage de phase, et des moyens (46, 47) pour reconnaître qu'un chemin est mal établi entre l'entrée et la sortie dudit tronçon.

3. Réseau de connexion selon la revendication 2, caractérisé par le fait que le circuit de réglage de phase (21) est constitué par une porte ET-NON (22), une première (23) et une deuxième (24) bascules, et une porte OU-NON (26), que la porte ET-NON, a une entrée reliée au circuit de comparaison (CC) duquel elle reçoit un signal de commande de réglage de phase (CRP) et une autre entrée reliée, dans le circuit de prélèvement, à un circuit de commande (28) duquel elle reçoit un signal logique de niveau 0 lorsque le module régénérateur auquel est relié le circuit de prélèvement est situé en entrée du tronçon et de niveau 1 lorsque le module régénérateur est situé en sortie du tronçon, que la première bascule (23) a une entrée horloge reliée à la sortie de la porte ET-NON (22), une entrée information recevant un signal logique de niveau 1, et que la deuxième bascule (24) a une entrée horloge reliée à un récupérateur de rythme (13) du circuit de prélèvement qui délivre un signal d'horloge récupérée à partir du signal numérique prélevé, une entrée information reliée à la sortie de la première bascule (23), et sa sortie reliée à l'entrée de remise à zéro de la première bascule (23) et à une entrée de la porte OU-NON (26) dont une autre entrée est reliée au récupérateur de rythme (13) et dont la sortie est reliée aux moyens d'échantillonnage (32, 33).

4. Réseau de connexion selon la revendication 2, caractérisé par le fait que les moyens d'échantillonnage sont constitués par un diviseur (32) et une bascule (33), le diviseur ayant une entrée reliée à la sortie du circuit de réglage de phase (21) et la bascule (33) ayant une entrée horloge reliée à la sortie du diviseur, une entrée information recevant le signal numérique prélevé, sa sortie délivrant des échantillons du signal numérique au circuit de comparaison (CC).

5. Réseau de connexion selon la revendication 2, caractérisé par le fait que les moyens du circuit de comparaison (CC) pour comparer les échantillons sont constitués par un comparateur d'échantillons (40) relié en entrée à chaque circuit de prélèvement par une première ligne (F3) acheminant les échantillons du signal numérique prélevé à l'entrée du tronçon et par une deuxième ligne (F4) acheminant les échantillons du signal numérique prélevé à la sortie du tronçon, que les moyens pour reconnaître qu'un chemin de transmission est bien établi entre l'entrée et la sortie du tronçon sont constitués par un compteur de coïncidences (43) et un comparateur (44), le compteur étant relié à une sortie coïncidence du comparateur d'échantillons (40), le comparateur (44) étant relié en entrée à la sortie du compteur de coïncidences et comparant le nombre de coïncidences délivré par le compteur de coïncidences à une valeur fixe, et délivrant un signal « connexion bien établie » (CBE) lorsque le nombre de coïncidences devient égal à la valeur fixe, que les moyens de mesure du taux d'erreurs sont constitués par un compteur d'erreurs (42) dont une entrée de comptage est reliée à une sortie d'anticoïncidence du comparateur d'échantillons (40) et une entrée de commande reliée à la sortie du comparateur (44) des moyens pour reconnaître qu'un chemin est bien établi, et que les moyens pour reconnaître qu'un chemin de transmission est mal établi entre l'entrée et la sortie du tronçon sont constitués par une porte ET (41), un compteur d'anticoïncidences (46) et un comparateur (47), la porte ET (41) ayant une entrée reliée à la sortie anticoïncidence du comparateur d'échantillons (40), une entrée inverseuse reliée à la sortie du comparateur (44) des moyens pour reconnaître un chemin bien établi, et une sortie reliée directement au compteur d'anticoïncidences (46) et par un inverseur (45) à une ligne (F1) reliée à tous les circuits de prélèvement et acheminant le signal de commande de réglage de phase (CRP), le comparateur (47) étant relié à la sortie du compteur d'anticoïncidences et comparant le nombre d'anticoïncidences délivré par le compteur d'anticoïncidences à une valeur fixe, et délivrant un signal « connexion mal établie » (CME) lorsque le nombre d'anticoïncidences devient égal à la valeur fixe.

## Claims

1. A multistage space switching network for high rate digital signals, connected to inlet lines (La) and outlet lines (Lb), wherein at least two consecutive stages are interconnected by a set of intermediate lines (Lla, Llb), each stage including switching matrices, said network including regenerator modules (MRA, MRS) at its inlets and at its outlets and in each intermediate line (Lla, Llb), with the regenerator modules at the inlets and at the outlets being connected to respective input lines and output lines, characterized in that the network comprises regenerator modules (MRA, MRS) at each end of the intermediate lines (Lla, Llb), and that each regenerator module comprises means for recovering the clock derived from the digital data received, said regenerator modules being adapted to correct degradations in the digital signals due to their passage through the inlet lines, the switching matrices and the intermediate lines.

2. A switching network according to claim 1, comprising a passive path monitoring device for bit-by-bit comparison of the digital signals sampled at two points along a transmission channel, which two points delimit a portion of the said channel, characterized in that the regenerator modules constitute sampling points for the digital signal, that the monitoring device comprises sampling circuits (Pa, Pb) connected to the regenerator modules and a comparator (CC) connected to the sampling circuit, that the regenerator modules at the input to the switching network are connected to a first sampling circuit (Pa), the regenerator modules at the output of the switching network are connected to a second sampling circuit (Pb), that each set of intermediate lines interconnecting two stages of the switching network is associated with an input sampling circuit and an output sampling circuit, said input sampling circuits being connected to the regenerator modules situated at the input of the intermediate lines and said output sampling circuits being connected to the regenerator modules situated at the output of the intermediate lines, that each sampling circuit includes sampling means (32, 33) for sampling the digital signal and a phase adjusting circuit (21) for the sampled digital signal to provide independence from the propagation time of the digital signal between the two regenerator modules at the end of the portion being sampled, and that the comparator circuit (CC) comprises means (40) for comparing the samples delivered by the sampling circuits associated with the regenerator modules of said portion, means (43, 44) for recognizing that a transmission channel is properly established between the input and the output of said portion, means (42) for measuring the error rate over said portion, and means (41, 45) for delivering a phase adjusting control signal, and means (46, 47) for recognizing when a channel is badly established over said monitored portion.

3. A switching circuit according to claim 2, characterized in that the phase adjusting circuit (21) is constituted by a NAND gate (22), first (23) and second bistables (24), and a NOR gate (26), that the NAND gate has one input connected to the comparator circuit (CC) from which it receives a phase adjusting control signal (CRP), and another input connected in the sampling circuit to a control circuit (28) from which it receives a logic level 0 signal when the regenerator module to which it is connected is situated at the input end of the portion and a logic level 1 signal when the regenerator module is situated at the output end of the the portion, that the first bistable (23) has a clock input connected to the output of the NAND gate (22), a data input connected to receive a logic level 1 signal, and that the second bistable (24) has a clock input connected to a clock recovery circuit (13) in the sampling circuit which delivers a clock signal recovered from the digital signal being sampled, a data input connected to the output from the first bistable (23) and has its output connected to the reset to zero input of the first bistable (23) and to one of the inputs of the NOR gate (26), whose other input is connected to the clock recovery circuit (13) and whose output is connected to the sampling means (32, 33).

4. A switching network according to claim 2, characterized in that the sampling means are constituted by a divider (32) and by a bistable (33), the divider having one input connected to the output from the phase adjusting circuit (21) and the bistable (33) having its clock input connected to the output from the divider, a data input receiving the sampled digital signal and its output delivering samples from the digital signal to the comparator (CC).

5. A switching network according to claim 2, characterized in that the comparator circuit means (CC) for comparing the samples are constituted by a sample comparator (40) having its input connected to each of the sampling circuits via a first line (F3) for conveying digital signal samples taken from the input of the monitored portion, and via a second line (F4) for conveying digital signal samples taken from the output of the monitored portion, that the means for recognizing that a transmission channel is properly established between the input and the output of the portion are constituted by a coincidence counter (43) and by a comparator (44), the counter being connected to a coincidence output from the sample comparator (40) and the comparator (44) being connected to the output from the coincidence counter and comparing the number of coincidences delivered by the coincidence counter with a fixed value to deliver a « good connection » signal (CBE), when the number of coincidences reaches the fixed value, that the means for measuring the error rate are constituted by an error counter (42) having a count input connected to a non-coincidence output from the sample comparator (40) and a control input connected to the output from the comparator (44) of the means for recognizing that a channel is properly established, and that the means for recognizing that a transmission channel is badly established between the input and the output of the monitored portion are constituted by an AND gate (41), a non-coincidence counter (46) and a comparator (47), the AND gate (41) having one input connected to the non-coincidence output from the sample comparator (40), an inverting input connected to the output from the comparator (44) of the means for recognizing that a channel is properly established, and an output connected directly to the non-coincidence counter (46) and via an inverter (45) to a line (F1) which is connected to all the sampling circuits for conveying a phase adjusting control signal (CRP), the comparator (47) being connected to the output from the non-coincidence counter and comparing the number of non-coincidences delivered by the non-coincidence counter with a fixed value and delivering a « bad connection » signal (CME) when the number of non-coincidences reaches the fixed value.

## Patentansprüche

1. Mehrstufiges Raumkoppelnetz für digitale Signale hoher Bitrate, das eingangsseitig an eingehende Leitungen (La) und ausgangsseitig an ausgehende Leitungen (Lb) angeschlossen ist, und in welchem mindestens zwei aufeinanderfolgende Stufen durch eine Gruppe von Zwischenleitungen (LIa, LIb) miteinander verbunden sind, wobei jede Stufe Schaltamatrizen aufweist und das Netzwerk Regeneratormodule (MRA, MRS) am Eingang und am Ausgang sowie in jeder Zwischenleitung (LIa ; LIb) aufweist, und die Regeneratormodule am Eingang und am Ausgang mit den ein- und ausgehenden Leitungen verbunden sind, dadurch gekennzeichnet, daß das Netz Regeneratormodule (MRA, MRS) an jedem Ende der Zwischenleitungen (LIa, LIb) besitzt und daß jeder Regeneratormodul Mittel zur Wiedergewinnung des Takts aus den von ihm empfangenen Daten aufweist, wobei die Regeneratormodule die beim Durchgang durch die eingehenden Leitungen, die Schaltmatrizen und die Zwischenleitungen entstehenden Verschlechterungen der Digitalsignale korrigieren.

2. Koppelnetz nach Anspruch 1, mit einer passiven Einrichtung zur Streckenkontrolle durch Vergleich der Digitalsignale Bit für Bit, welche einem Übertragungsweg an zwei Punkten entnommen werden, die zwischen sich einen Streckenabschnitt dieses Weges begrenzen, dadurch gekennzeichnet, daß die Regeneratormodule Entnahmepunkte für das Digitalsignal bilden, daß die Kontrolleinrichtung Entnahmekreise (Pa, Pb), welche mit den Regeneratormodulen verbunden sind, und einen Vergleichskreis (CC), welcher mit den Entnahmekreisen verbunden ist, aufweisen, daß die Regeneratormodule am Eingang des Koppelnetzes mit einem ersten Entnahmekreis (Pa) und die Regeneratormodule am Ausgang des Koppelnetzes mit einem zweiten Entnahmekreis (Pb) verbunden sind, daß jeder Gruppe von Zwischenleitungen, die zwei Stufen des Koppelnetzes verbinden, ein Entnahmekreis am Eingang und ein Entnahmekreis am Ausgang der Zwischenleitungen zugeordnet ist, wobei die Entnahmekreise am Eingang an die Regeneratormodule am Eingang der Zwischenleitungen und die Entnahmekreise am Ausgang an die Regeneratormodule am Ausgang der Zwischenleitungen angeschlossen sind, daß jeder Entnahmekreis Tastmittel (32, 33) zur Entnahme des Digitalsignals sowie einen Kreis (21) zur Einstellung der Phase des entnommenen Digitalsignals aufweist, um von der Laufzeit des Digitalsignals zwischen den beiden Regeneratormodulen des Streckenabschnitts unabhängig zu sein, an dessen Enden die Entnahmen erfolgen, und daß der Vergleichskreis (CC) Mittel (40) zum Vergleichen der Tastproben, die von den mit den Regeneratormoduln des Streckenabschnitts in Verbindung stehenden Entnahmekreisen geliefert werden, Mittel (43, 44) zur Erkennung, ob ein Übertragungsweg zwischen dem Eingang und Ausgang des Streckenabschnitts richtig hergestellt ist, Mittel (42) zum Messen der Fehlerrate auf dem Streckenabschnitt und Mittel (41, 45) zur Lieferung eines Befehlssignals zur Einstellung der Phase, und Mittel (46, 47) aufweist, die erkennen, ob ein Übertragungsweg zwischen dem Eingang und Ausgang des Streckenabschnitts schlecht hergestellt ist.

3. Koppelnetz nach Anspruch 2, dadurch gekennzeichnet, daß der Phaseneinstellkreis (21) aus einem NAND-Tor (22), einer ersten (23) und einer zweiten Kippstufe (24) und einem NOR-Tor (26) besteht, daß das NAND-Tor mit einem Eingang an den Vergleichskreis (CC) angeschlossen ist, von dem es ein Befehlssignal (CRP) zur Phaseneinstellung empfängt, und mit einem anderen Eingang innerhalb des Entnahmekreises an einen Befehlskreis (28) angeschlossen ist, von dem es ein Logiksignal mit Pegel 0 empfängt, wenn sich der Regeneratormodul, an welchen der Entnahmekreis angeschlossen ist, am Eingang des Streckenabschnitts befindet, und mit Pegel 1, sofern sich der Regeneratormodul am Ausgang des Streckenabschnitts befindet, daß die erste Kippstufe (23) mit einem Takteingang an den Ausgang des NAND-Tors (22) angeschlossen ist, während ein Dateneingang ein Logiksignal mit Pegel 1 empfängt, und daß die zweite Kippstufe (24) mit einem Takteingang an eine Taktwiedergewinngsstufe (13) des Entnahmekreises angeschlossen ist, die ein aus dem entnommenen Digitalsignal wiedergewonnenes Taktsignal liefert, mit einem Dateneingang an den Ausgang der ersten Kippstufe (23) und mit ihrem Ausgang an den Nullstelleingang der ersten Kippstufe (23) sowie an einen Eingang des NOR-Tors (26) angeschlossen ist, von dem ein anderer Eingang mit der Taktwiedergewinnungsstufe (13) und der Ausgang mit den Tastprobenentnahmemitteln (32, 33) verbunden sind.

4. Koppelnetz nach Anspruch 2, dadurch gekennzeichnet, daß die Tastprobenentnahmemittel aus einem Teilerkreis (32) und einer Kippstufe (33) bestehen, wobei der Teilerkreis mit einem Eingang an den Ausgang des Phaseneinstellkreises (21), und die Kippstufe (33) mit einem Takteingang an den Ausgang des Teilerkreises angeschlossen sind, wobei ein Dateneingang das entnommene Digitalsignal empfängt, und sein Ausgang Tastproben des Digitalsignals an den Vergleichskreis (CC) liefert.

5. Koppelnetz nach Anspruch 2, dadurch gekennzeichnet, daß die Mittel des Vergleichskreises (CC) zum Vergleichen der Tastproben aus einem Tastprobenkomparator (40) bestehen, der eingangsseitig über eine erste Leitung (F3), welche die Tastproben des am Eingang des Streckenabschnitts entnommenen Digitalsignals befördert, und über eine zweite Leitung (F4), welche die Tastproben des am Ausgang des Streckenabschnitts entnommenen Digitalsignals befördert, an jeden Entnahmekreis angeschlossen ist, daß die Mittel zur Erkennung, ob ein Übertragungsweg zwischen den Eingang und Ausgang des Streckenabschnitts richtig hergestellt ist, aus einem Koinzidenzzähler (43) und einem Komparator (4) bestehen, wobei der Zähler an einen Koinzidenzausgang des Tastprobenkomparators (40) und der Komparator eingangsseitig an den Ausgang des Koinzidenzzählers angeschlossen ist und die Anzahl der Koinzidenzen, die von Koinzidenzzähler geliefert wird, mit einem Festwert vergleicht, wonach er ein Signal « richtige Verbindung hergestellt » (CBE) liefert, wenn die Anzahl der Koinzidenzen den Festwert erreicht, daß die Mittel zur Messung der Fehlerrate aus einem Fehlerzähler (42) bestehen, dessen Zähleingang mit einem Antikoinzidenzausgang des Tastprobenkomparators (40) und dessen Befehlseingang mit dem Ausgang des Komparators (44) der Mittel zur Erkennung der richtigen Herstellung eines Übertragungswegs verbunden ist, und daß die Mittel zur Erkennung der schlechten Herstellung eines Übertragungswegs zwischen dem Eingang und dem Ausgang des Streckenabschnitts aus einem UND-Tor (41), einem Antikoinzidenzzähler (46) und einem Komparator (47) bestehen, wobei das UND-Tor (41) mit einem Eingang an den Antikoinzidenzausgang des Tastprobenkomparators (40), mit einem inversen Eingang an den Ausgang des Komparators (44) zur Erkennung der richtigen Herstellung eines Übertragungswegs, und mit einem Ausgang direkt an den Antikoinzidenzzähler (46) sowie über einen Inverter (45) an eine Leitung (F1) angeschlossen ist, welche mit allen Entnahmekreisen verbunden ist und das Befehlssignal zur Phaseneinstellung (CRP) befördert, wobei der Komparator (47) an den Ausgang des Antikoinzidenzzählers angeschlossen ist und die Anzahl der vom Antikoinzidenzzähler gelieferten Antikoinzidenzen mit einem Festwert vergleicht sowie ein Signal « Vergindung schlecht hergestellt » (CME) liefert, wenn die Anzahl der Antikoinzidenzen den Festwert erreicht.

FIG.1

EP 0 160 826 B1

FIG.2

FIG.3

# FIG.4

# FIG.5

# FIG.6

FIG.7

FIG.8

8